(19) **Europäisches Patentamt**

**European Patent Office**

**Office européen des brevets**

(11) **EP 0 945 709 B1**

(12) **EUROPÄISCHE PATENTSCHRIFT**

(45) Veröffentlichungstag und Bekanntmachung des Hinweises auf die Patenterteilung:
**11.06.2003 Patentblatt 2003/24**

(51) Int Cl.⁷: $G01D\ 5/20$

(21) Anmeldenummer: **99102718.6**

(22) Anmeldetag: **18.02.1999**

(54) **Verfahren und Vorrichtung zur Bestimmung der Position eines induktiven Wegsensors**

Method and apparatus for determining the position of an inductive displacement sensor

Procédé et dispositif pour déterminer la position d'un capteur inductif de déplacement

(84) Benannte Vertragsstaaten:
**DE FR GB**

(30) Priorität: **25.03.1998 DE 19813063**

(43) Veröffentlichungstag der Anmeldung:
**29.09.1999 Patentblatt 1999/39**

(73) Patentinhaber: **Siemens Aktiengesellschaft
80333 München (DE)**

(72) Erfinder: **Stoll Bernward
60389 Frankfurt (DE)**

(56) Entgegenhaltungen:
**EP-A- 0 561 054       DE-A- 4 443 259**

**Beschreibung**

Die Erfindung betrifft ein Verfahren zur Auswertung des Signals eines induktiven Wegsensors, der mindestens eine Spule und einen in der Spule linear frei beweglichen Magnetkern aus einem weichmagnetischen Material enthält und dessen Spule mit Spannungsimpulsen beaufschlagt wird, wobei die zeitliche Änderung des durch die Spannungsimpulse erzeugten Stroms ermittelt wird.

Induktive Wegsensoren sind seit langem bekannt und werden vom prinzipiellen Aufbau her beispielsweise im "Handbuch für elektrisches Messen mechanischer Größen", VDI-Verlag, Düsseldorf 1967 beschrieben. Ein dort als Tauchankergeber bezeichneter Wegsensor weist im wesentlichen eine lineare Spule sowie einen stabförmigen Magnetkern aus einem weichmagnetischen Material mit der Permeabiltät $\mu$ auf, der in der Spule linear frei beweglich angeordnet ist. Die Induktivität der Spule ändert sich in Abhängigkeit von der Position des weichmagnetischen Kerns in der Spule und ist daher ein Maß für dessen Position.

Die Induktivität der Spule setzt sich aus zwei Anteilen zusammen, nämlich:

a) einem ersten Anteil, der von dem Bereich der Spule gebildet wird, der das weichmagnetische Material der Permeabilität $\mu = \mu o * \mu r$ enthält ($\mu o$ = Induktionskonstante, $\mu r$ = relative Permeabilität des Magnetmaterials), sowie b) einem zweiten Anteil, der einer Luftspule ($\mu r = 1$) entspricht und somit die Permeabilität $\mu = \mu o$ aufweist. Die Gesamtinduktivität der Spule ist vom Verhältnis dieser beiden Anteile und somit von der Position des weichmagnetischen Kerns in der Spule abhängig und kann zur Bestimmung der Position des weichmagnetischen Kerns herangezogen werden. Hierzu ist jedoch, wie in der obengenannten Literaturstelle angegeben, die Bestimmung der Induktivität erforderlich.

Aus der DE 41 18 975 A1 ist die technische Ausführung eines induktiven Wegsensors bekannt, der hier gleichzeitig als elektromagnetisches Stellglied ausgebildet ist. Die Spule des Stellgliedes wird mit einer Steuerspannung U sowie mit Spannungsimpulsen $\Delta u$ beaufschlagt. Der Kern nimmt hierbei eine Position ein, die sich aus dem Gleichgewicht zwischen der Rückstellkraft einer Feder und der durch den Steuerstrom I bedingten elektromotorischen Kraft ergibt. Zur Positionserkennung wird die zeitliche Änderung des durch die Spannungsimpulse erzeugten Stromes herangezogen. Vorzugsweise wird dabei die Zeitspanne $\Delta t$ ermittelt, die bis zum Erreichen einer vorgegebenen Änderung $\Delta i$ des durch die Spannungsimpulse $\Delta u$ erzeugten Stroms vergeht. Aus der DE 44 43 259 A1 und der EP 0 561 054 A1 sind weitere ähnliche technische Ausführungen eines induktiven Wegrensors bekannt.

In der Praxis wird mit Beginn jedes Spannungsimpulses ein Zeitzählwerk gestartet. Der gemessene Strom wird einem Komparator zugeführt und dort mit einem vorgegebenen Schwellwert verglichen. Erreicht der gemessene Stromwert den vorgegebenen Schwellwert, so wird die Zeitmessung gestoppt. Die von der Position des Kern in der Spule abhängige Induktivität kann dann mit dem gemessenen Zeitwert, der Komparatorspannung, der Höhe des Spannungssprungs, der Permeabilität des Kernmaterials und gegebenenfalls weiteren Größen, die zur Bestimmung des Stromwertes beitragen, wie beispielsweise der Größe eines Meßwiderstandes, bestimmt werden. Insbesondere durch die erforderliche Berechnung eines logarithmischen Wertes (siehe z.B. EP054, die bei Digitalrechnern durch eine zeitintensive Reihenentwicklung erfolgt, erfordert das Verfahren eine hohe Rechnerkapazität. Da zudem der Einfluß der Spulengeometrie und der Materialeigenschaften rechnerisch nur aufwendig zu ermitteln ist, wird auf Meßreihen des Wegsensors zurückgegriffen, um die Basiswerte für die Induktivität und die Permeabilität zu ermitteln.

Weiterhin ist aber auch die Permeabilität des Kernmaterials ihrerseits temperaturabhängig, so daß zusätzlich die Temperatur des Wegsensors zu bestimmen ist. Dies kann durch die Bestimmung des Spulenwiderstands erfolgen, wobei vorausgesetzt wird, daß Spule und Kern die gleiche Temperatur aufweisen. Aus dem gemessenen Spulenwiderstand $R_\vartheta$ kann bei bekanntem Widerstand $R_0$ der Spule bei einer Bezugstemperatur $\vartheta_0$ und dem Widerstandstemperaturkoeffizienten des Wicklungsmaterials (i.a. Kupfer) die aktuelle Spulentemperatur $\vartheta$ bestimmt werden. In der DE 41 41 065 A1 ist ein Verfahren zur Temperaturkompensation von induktiven Sensoren näher beschrieben. Zur Speicherung der erforderlichen Korrekturdatei ist jedoch eine relativ große Speicherkapazität erforderlich.

Der beschriebene Weg zur Bestimmung der Position des weichmagnetischen Kerns eines gattungsgemäßen Wegsensors über die Bestimmung der Induktivität, insbesondere unter Berücksichtigung der Temperaturabhängigkeit, benötigt somit zum einen viel Rechenzeit und hat zum anderen einen hohen Speicherbedarf. Aufgabe der Erfindung ist es daher, ein Verfahren anzugeben, das eine einfache Bestimmung der Position eines induktiven Wegsensors gestattet.

Die Aufgabe wird dadurch gelöst, daß die Position des weichmagnetischen Kerns durch eine Bestimmungsgleichung aus der Stromanstiegsgeschwindigkeit und der Stromamplitude E oder hierzu proportionalen Größen bestimmt wird. Eine Stromanstiegsgeschwindigkeit wird generell als Quotient aus einem Stromintervall $\Delta I$ und einem dazu gehörigen Zeitintervall $\Delta t$ bestimmt. Erfindungsgemäß ist insbesondere vorgesehen, daß ein Stromintervall von $1=0$, d.h. vom Beginn des Spannungsimpulses, bis zu einem festen Vorgabewert festgelegt ist und die Zeitdauer $\Delta t$ bis zum Erreichen dieses Vorgabewertes gemessen wird. Die Position des weichmagnetischen Kerns wird dann durch eine Bestimmungsgleichung aus der Zeit $\Delta t$ bis zum Erreichen des Vorgabewertes und der Stromamplitude E bestimmt. Alternativ kann jedoch als Maß für die Stromanstiegsgeschwindigkeit auch die Stromdifferenz innerhalb eines vorgegebenem Zeitintervalls bestimmt werden. Die Bestimmung der Position des weichmagnetischen Kerns erfolgt dann mit Hilfe dieser Stromdifferenz und der Stromamplitude in zu der bevorzugten Vorgehensweise analoger Art und Weise.

Ein zur Anwendung des Verfahrens geeigneter Wegsensor mit Auswerteeinheit enthält mindestens eine Spule und einen in der Spule frei beweglichen Magnetkern aus weichmagnetischem Material, Mittel zur Erzeugung von Spannungsimpulsen in der Spule, Mittel zur Erfassung der Stromanstiegsgeschwindigkeit und der Stromamplitude oder hierzu proportionaler Größen sowie Mittel zur Berechnung der Position aus der Stromanstiegsgeschwindigkeit und der Stromamplitude.

Der Lösung der Aufgabe liegt die Erkenntnis zugrunde, daß der induktive Wegsensor als "black box" betrachtet werden kann und daß jeder Position und jeder Temperatur eindeutig ein Wertepaar bestehend aus dem Zeitintervall $\Delta t$ bis zum Erreichen eines vorgegebenen Stromwertes (Stromanstiegszeit) und dem Endwert E des Stromanstiegs (Stromamplitude) zugeordnet werden kann. Aufgrund dieser Erkenntnis kann auf die zeit- und rechenintensive Bestimmung der Induktivität verzichtet werden. Ebenso ist eine Bestimmung der Spulentemperatur zur Korrektur der Permeabilität des Kerns und daraus abgeleitet auch der Induktivität zur Bestimmung der Position des Kerns in der Spule nicht erforderlich.

In erster Näherung ist die Position w des Kerns linear abhängig vom Zeitintervall $\Delta t$ bis zum Erreichen des Vorgabewertes. Eine hinreichende Genauigkeit wird für viele Anwendungsfälle bereits mit einer einfachen Bestimmungsgleichung der Form

$$w = Z_t \cdot \Delta t + Z_{Et} \cdot E \cdot \Delta t$$

erreicht. $Z_t$ und $Z_{Et}$ sind hierbei Anpassungsparameter. Diese Parameter müssen nur einmal bestimmt werden. Die Bestimmung der Parameter erfolgt in bekannter Weise durch die Approximation der nach der Bestimmungsgleichung bestimmten Position an die tatsächliche Position des Kerns. Dies kann beispielsweise durch die Methode der linearen Regression erfolgen. Durch die Bestimmung der Position mittels einer einfachen Bestimmungsgleichung wird die Bereitstellung einer nur geringen Rechenkapazität erforderlich. Auch der Speicherbedarf ist gering, da nur wenige, hier zwei, Parameter abgelegt werden müssen.

Die Steigung der Geraden ist noch geringfügig temperaturabhängig. Eine weitere Verbesserung der Genauigkeit wird daher durch die Hinzunahme weiterer linearer Terme der Stromanstiegszeit und der Stromamplitude erreicht werden. Dies kann durch eine rationale Bestimmungsgleichung der Form

$$w = \frac{Z + Z_t \cdot \Delta t + Z_E \cdot E + Z_{Et} \cdot E \cdot \Delta t}{1 + N_t \cdot \Delta t + N_E \cdot E + N_{Et} \cdot E \cdot \Delta t}$$

erfolgen, wobei $Z$, $Z_t$, $Z_E$, $Z_{Et}$, $N_t$, $N_E$, NEt wiederum Anpassungsparameter bezeichnen.

Eine weitere vorteilhafte Form der Bestimmungsgleichung hat die Form einer Potenzreihe, wobei die Verwendung von Potenzen bis zur zweiten Ordnung im allgemeinen ausreichend ist:

$$w = Z + Z_t \cdot \Delta t + Z_{tt} \cdot (\Delta t)^2 + Z_E \cdot E + Z_{ET} \cdot E \cdot \Delta t + Z_{Ett} \cdot E \cdot (\Delta t)^2 + Z_{EE} \cdot E^2 + Z_{EEt} \cdot E^2 \cdot \Delta t + Z_{EEu} \cdot E^2 \cdot (\Delta t)^2$$

$Z$, $Z_t$, $Z_{tt}$, $Z_E$, $Z_{Et}$, $Z_{Ett}$, $Z_{EE}$, $Z_{EEt}$, $Z_{EEtt}$ bezeichnen hier die erforderlichen Anpassungsparameter.

Anhand der Figuren wird die Erfindung nachfolgend näher beschrieben.

Es zeigen :

Fig. 1 eine Prinzipdarstellung eines induktiven Wegsensors zur Anwendung des erfindungsgemäßen Verfahrens sowie die zur Durchführung des Verfahrens eingesetzten Mittel und

Fig. 2 den Stromverlauf.

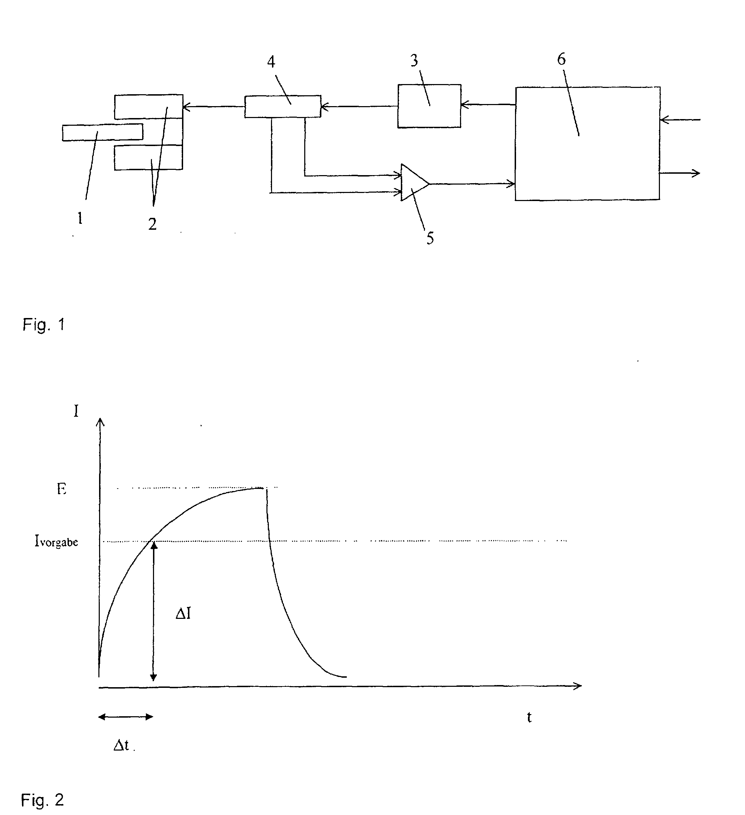

In Fig. 1 ist schematisch ein Wegsensor dargestellt, der einen weichmagnetischen Kern 1 und eine hier als Schnittbild dargestellte lineare Spule 2 beinhaltet. Der weichmagnetische Kern 1 ist linear frei beweglich in der Spule 2 angeordnet. Er kann auch beispielsweise mittels einer Feder gehalten werden. Die Spule 2 wird von einer steuerbaren Spannungsquelle 3 über einen Widerstand 4 mit Spannungsimpulsen $\Delta u$ beaufschlagt. Zur Registrierung des Stromverlaufs durch die Spule 2 wird der Spannungsabfall am Widerstand 4 bestimmt. Hierzu wird der am Widerstand 4 gemessene Spannungsabfall über eine Signalaufbereitung 5 einem Mikroprozessor 6 zugeführt. Im Mikroprozessor 6 wird das Zeitintervall Δt bis zum Erreichen eines Vorgabewertes sowie die Stromamplitude E selbst ermittelt. Das Zeitintervall kann auch außerhalb des Mikroprozessors 6 in einem Komparator ermittelt und dem Mikroprozessor zugeführt werden. Im Mikroprozessor ist die Bestimmungsgleichung zur Bestimmung der Position des weichmagnetischen Kerns 2 sowie ein zur Bestimmungsgleichung gehöriger Satz von Anpassungsparametern Z bzw. Z und N abgespeichert. Im Mikroprozessor wird dann mit Hilfe der Bestimmungsgleichung aus dem Zeitintervall Δt und der Stromamplitude E sowie den Anpassungsparametern die Position des Kerns 2 bestimmt.

In Fig. 2 ist der zeitliche Verlauf des Spulenstroms dargestellt. Zur Bestimmung der mittleren Stromanstiegsgeschwindigkeit kann, wie in der bevorzugten Ausführungsform beschrieben, ein Stromschwellwert $I_{vorgabe}$ vorgegeben werden und die Zeitdauer Δt bis zum Erreichen des Vorgabewertes bestimmt werden. Der Beginn des gewählten Zeitintervalls muß dabei nicht zwangsläufig mit dem Beginn des Spannungsanstiegs zusammenfallen.

Wie eingangs angegeben ist es aber auch möglich, ein bestimmtes Zeitintervall vorzugeben und das in dieser Zeit überstrichene Stromintervall Δl zu bestimmen und mit einer Bestimmungsgleichung aus Δl (als zur Stromanstiegsgeschwindigkeit proportionale Größe) und der Stromamplitude E die Position des Kerns zu bestimmen. Die Anpassungsparameter werden sich in diesem Fall von denen nach der erstgenannten Methode unterscheiden, jedoch ist ihre experimentelle Ermittlung ohne weiteres möglich.

Anwendung findet das erfindungsgemäße Verfahren hauptsächlich dort, wo nur eine beschränkte Rechenkapazität und / oder eine eingeschränkte Speicherkapazität vorhanden, bzw. diese anderweitig hoch ausgelastet sind. Dies trifft insbesondere auf Anwendungen in Kraftfahrzeugen zu.

## Patentansprüche

1.  Verfahren zur Auswertung des Signals eines induktiven Wegsensors, der mindestens eine Spule (2) und einen in der Spule linear frei beweglichen Magnetkern (1) aus einem weichmagnetischen Material enthält und dessen Spule (2) mit Spannungsimpulsen beaufschlagt wird, wobei die zeitliche Änderung des durch die Spannungsimpulse erzeugten Stroms ermittelt wird, **dadurch gekennzeichnet, daß** die Position des weichmagnetischen Kerns durch eine Bestimmungsgleichung aus der Stromanstiegsgeschwindigkeit und der Stromamplitude (E) oder hierzu proportionalen Größen bestimmt wird.

2.  Verfahren nach Anspruch 1, **dadurch gekennzeichnet, daß** als zur Stromanstiegsgeschwindigkeit proportionale Größe die Stromanstiegszeit Δt vom Beginn des Spannungsimpulses bis zum Erreichen eines vorgegebenen Stromwertes verwendet wird.

3.  Verfahren nach Anspruch 2, **dadurch gekennzeichnet, daß** die Position als lineare Näherung aus der Stromanstiegszeit und der Stromamplitude bestimmt wird.

4.  Verfahren nach Anspruch 3, **dadurch gekennzeichnet, daß** die Position w als lineare Näherung gemäß der Formel

$$w = Z_t \cdot \Delta t + Z_{Et} \cdot E \cdot \Delta t$$

bestimmt wird, wobei $Z_t$, $Z_{Et}$ Anpassungsparameter bezeichnen.

5.  Verfahren nach Anspruch 4, **gekennzeichnet durch** eine rationale Funktion mit linearen Termen der Stromanstiegszeit und der Stromamplitude.

6.  Verfahren nach Anspruch 5, **gekennzeichnet durch** die Bestimmungsgleichung

$$w = \frac{Z + Z_t \cdot \Delta t + Z_E \cdot E + Z_{Et} \cdot E \cdot \Delta t}{1 + N_t \cdot \Delta t + N_E \cdot E + N_{Et} \cdot E \cdot \Delta t}$$

wobei Z und N Anpassungsparameter bezeichnen.

7.  Verfahren nach Anspruch 2, **dadurch gekennzeichnet, daß** die Bestimmungsgleichung lineare und quadratische Terme der Stromanstiegszeit und der Stromamplitude enthält.

8.  Verfahren nach Anspruch 7, **gekennzeichnet durch** die Bestimmungsgleichung

$$w = Z + Z_t \cdot \Delta t + Z_{tt} \cdot (\Delta t)^2 + Z_E \cdot E + Z_{ET} \cdot E \cdot \Delta t + Z_{Ett} \cdot E \cdot (\Delta t)^2 + Z_{EE} \cdot E^2 + Z_{EEt} \cdot E^2 \cdot \Delta t + Z_{EEu} \cdot E^2 \cdot (\Delta t)^2$$

9. Verfahren nach Anspruch 1, **dadurch gekennzeichnet, daß** als zur Stromanstiegsgeschwindigkeit proportionale Größe die Stromdifferenz zu Anfang und Ende eines vorgegebenen Zeitintervalls verwendet wird.

10. Induktiver Wegsensor mit Auswerteeinheit, der mindestens eine Spule (2) und einen in der Spule frei beweglichen Magnetkern (1) aus weichmagnetischen Material, Mittel zur Erzeugung von Spannungsimpulsen in der Spule, Mittel zur Erfassung der Stromanstiegsgeschwindigkeit und der Stromamplitude oder hierzu proportionaler Größen sowie Mittel zur Berechnung der Position des weichmagnetischen Kerns aus der Stromanstiegsgeschwindigkeit und der Stromamplitude enthält.

**Claims**

1. Method for evaluating the signal of an inductive displacement sensor which includes at least one coil (2) and a magnet core (1) of a soft-magnetic material which can freely move linearly in the coil and the coil (2) of which is subjected to voltage pulses, with the change over time of the current generated by the voltage pulses being determined, **characterized in that** the position of the soft-magnetic core is determined by a determining equation from the rate of current rise and the current amplitude (E) or variables proportional to these.

2. Method according to Claim 1, **characterized in that** the current rise time $\Delta t$ from the beginning of the voltage pulse until a specified current value is reached is used as the variable proportional to the rate of current rise.

3. Method according to Claim 2, **characterized in that** the position is determined as a linear approximation from the current rise time and the current amplitude.

4. Method according to Claim 3, **characterized in that** the position w is determined as a linear approximation according to the formula

$$w = Z_t \cdot \Delta t + Z_{Et} \cdot E \cdot \Delta t$$

where $Z_t$, $Z_{Et}$ denote adaptation parameters.

5. Method according to Claim 4, **characterized by** a rational function with linear terms of the current rise time and the current amplitude.

6. Method according to Claim 5, **characterized by** the defining equation

$$w = \frac{Z + Z_t \cdot \Delta t + Z_E \cdot E + Z_{Et} \cdot E \cdot \Delta t}{1 + N_t \cdot \Delta t + N_E \cdot E + N_{Et} \cdot E \cdot \Delta t}$$

where Z and N denote adaptation parameters.

7. Method according to Claim 2, **characterized in that** the defining equation includes linear and quadratic terms of the current rise time and the current amplitude.

8. Method according to Claim 7, **characterized by** the defining equation

$$w = Z + Z_t \cdot \Delta t + Z_{tt} \cdot (\Delta t)^2 + Z_E \cdot E + Z_{ET} \cdot E \cdot \Delta t + Z_{Ett} \cdot E \cdot (\Delta t)^2 + Z_{EE} \cdot E^2 + Z_{EEt} \cdot E^2 \cdot \Delta t + Z_{EEu} \cdot E^2 \cdot (\Delta t)^2$$

9. Method according to Claim 1, **characterized in that** the difference in current at the beginning and end of a specified time interval is used as the variable proportional to the rate of current rise.

10. Inductive displacement sensor with an evaluation unit, which includes at least one coil (2) and a magnet core (1) of soft-magnetic material which can freely move in the coil, means for generating voltage pulses in the coil, means for sensing the rate of current rise and the current amplitude or variables proportional to these and also means for calculating the position of the soft-magnetic core from the rate of current rise and the current amplitude.

## Revendications

1.  Procédé pour évaluer le signal d'un capteur de position inductif contenant au moins une bobine (2) et un noyau magnétique (1) réalisé en un matériau magnétique doux librement mobile de manière linéaire dans la bobine (2) à laquelle sont appliquées des impulsions de tension, la variation dans le temps du courant produit par les impulsions de tension étant déterminée, **caractérisé en ce que** la position du noyau en matériau magnétique doux est déterminée par une équation de détermination entre la vitesse de montée du courant et l'amplitude du courant (E) ou entre d'autres grandeurs qui leur sont proportionnelles.

2.  Procédé selon la revendication 1, **caractérisé en ce qu'**on utilise comme grandeur proportionnelle à la vitesse de montée du courant le temps de montée du courant $\Delta t$ depuis le début de l'impulsion de tension jusqu'à ce qu'une valeur de courant donnée soit atteinte.

3.  Procédé selon la revendication 2, **caractérisé en ce que** la position est déterminée comme approximation linéaire du temps de montée du courant et de l'amplitude de courant.

4.  Procédé selon la revendication 3, **caractérisé en ce que** la position w est déterminée comme approximation linéaire selon la formule

$$w = Z_t \cdot \Delta t + Z_{Et} \cdot E \cdot \Delta t$$

$Z_t$ et $Z_{Et}$ étant des paramètres d'adaptation.

5.  Procédé selon la revendication 4, **caractérisé par** une fonction rationnelle avec des termes linéaires par rapport au temps de montée du courant et à l'amplitude de courant.

6.  Procédé selon la revendication 5, **caractérisé par** l'équation de détermination

$$w = \frac{Z + Z_t \cdot \Delta t + Z_E \cdot E + Z_{Et} \cdot E \cdot \Delta t}{1 + N_t \cdot \Delta t + N_E \cdot E + N_{Et} \cdot E \cdot \Delta t},$$

Z et N étant des paramètres d'adaptation.

7.  Procédé selon la revendication 2, **caractérisé en ce que** l'équation de détermination contient des termes linéaires et quadratiques de temps de montée du courant et de l'amplitude de courant.

8.  Procédé selon la revendication 7, **caractérisé par** l'équation de détermination

$$w = Z + Z_t \cdot \Delta t + Z_{tt} \cdot (\Delta t)^2 + Z_E \cdot E + Z_{ET} \cdot E \cdot \Delta t + Z_{Ett} \cdot E \cdot (\Delta t)^2 + Z_{EE} \cdot E^2 + Z_{EEt} \cdot E^2 \cdot \Delta t + Z_{EEu} \cdot E^2 \cdot (\Delta t)^2$$

9.  Procédé selon la revendication 1, **caractérisé en ce que** la grandeur proportionnelle à la vitesse de montée du courant utilisée est la différence de courant entre le début et la fin d'un intervalle de temps donné.

10. Capteur de position inductif avec unité d'évaluation comportant au moins une bobine (2) et un noyau magnétique (1) réalisé en un matériau magnétique doux librement mobile dans la bobine, des moyens pour produire des impulsions de tension dans la bobine, des moyens pour détecter la vitesse de montée du courant et l'amplitude de courant ou des grandeurs qui leur sont proportionnelles ainsi que des moyens pour calculer la position du noyau en matériau magnétique doux à partir de la vitesse de montée du courant et de l'amplitude de courant.

Fig. 1

Fig. 2